# DEMANDE DE BREVET EUROPEEN

(11) **EP 3 392 224 A1**
(43) Date de publication de la demande: **24.10.2018**
(21) Numéro de dépôt: 18168466.3
(22) Date de dépôt: 20.04.2018
(51) Int. Cl.: C04B 28/14

(54) **UTILISATION D'UN AGENT ENTRAINEUR D AIR POUR DIMINUER LE TEMPS DE SECHAGE D'UNE CHAPE A BASE DE SULFATE DE CALCIUM**

(30) Priorité: 20.04.2017 FR 1753420
(71) Demandeur: Anhydritec, 84800 L'Isle-sur-la-Sorgue (FR)
(72) Inventeur: NARANJO, Horacio, 84800 L'Isle-sur-la-Sorgue (FR); JALLA, Sébastien, 84450 Saint-Saturnin-Les-Avignon (FR); SERRE, Aurore, 84300 Cavaillon (FR)
(74) Mandataire: August Debouzy

(57) **Abrégé**

L'invention concerne l'utilisation d'un agent entraineur d'air dans une chape contenant un liant hydraulique à base de sulfate de calcium pour diminuer le temps de séchage et augmenter la cohésion de surface de ladite chape, ladite chape étant obtenue par séchage d'un mortier pour chape présentant une quantité d'air allant de 0,1% à 50% volumique et un ratio massique eau totale/liant allant de 0,28 à 0,70. L'invention concerne également un mortier de chape et une chape obtenue par séchage du mortier de chape.

## Description

### DOMAINE DE L'INVENTION

La présente invention a pour objet l'utilisation d'un agent entraineur d'air pour diminuer de manière drastique le temps de séchage d'une chape à base de sulfate de calcium tout en maintenant les propriétés mécaniques de ladite chape.

La présente invention propose également l'utilisation d'un agent entraineur d'air pour augmenter la cohésion de surface d'une chape à base de sulfate de calcium.

La présente invention a également pour objet un mortier pour chape et une chape obtenue par séchage dudit mortier.

### ARRIERE-PLAN TECHNIQUE

La chape anhydrite ou chape sulfate de calcium est bien connue de l'homme du métier. C'est un mortier fluide à base d'un liant base sulfate de calcium, fibré ou non, généralement préparé en centrale de production (centrales à béton le plus souvent) pour la réalisation de chapes autonivelantes, et livré sur chantier en camion malaxeur ou livré directement sur chantier par un système de distribution type camion mobile (Transmix™) ou bien en silos de mortier sec. Les matériaux pour chape anhydrite sont le sujet des normes EN 13454-1 et EN 13813.

On connaît aussi les chapes ciment, dans lesquelles le liant hydraulique est un ciment et non plus du sulfate de calcium. Les matériaux pour chapes ciment sont le sujet des normes EN 197-1 et EN 13813.

La formulation de compositions de mortier de chape comprend un ajout d'eau permettant d'hydrater le liant hydraulique, pour donner par exemple dans le cas du liant à base de sulfate de calcium, des cristaux de gypse.

Lorsque le processus d'hydratation du liant est terminé, le mortier contient encore un excédent d'eau nécessaire pour donner le caractère autoplaçant à ce dernier. Cet excédent d'eau est généralement appelé eau libre ou humidité résiduelle du mortier. Cette quantité d'eau libre, pouvant représenter généralement de 5 à 10% en poids du poids total du mortier, doit être retirée par évaporation avant recouvrement du mortier, par exemple par un revêtement de surface de type carrelage, bois ou un sol plastique tel que PVC.

Le séchage des matériaux contenant de l'eau libre tels que le bois ou les mortiers à base de liant hydraulique comprend généralement trois phases :
- Phase I : L'eau liquide s'évapore par capillarité (phase où la vitesse de séchage est la plus importante)
- Phase II : Le transfert hydrique se fait par diffusion de vapeur (phase où la vitesse de séchage décroit rapidement)
- Phase III : Le mortier atteint son équilibre hygroscopique. Dans le cas des chapes base sulfate de calcium cet équilibre est généralement compris entre 0 et 0,2% d'humidité résiduelle en fonction de l'humidité relative alors que pour les chapes ciment cet équilibre est atteint entre 3 et 4%.

Pour atteindre l'humidité permettant de recouvrir la chape, il est généralement nécessaire d'attendre un certain temps, dit temps de séchage ou délai de séchage. A titre d'exemple, selon les règlementations françaises en vigueur, une quantité d'eau résiduelle maximum dans la chape est de 1% en masse dans le cas d'un recouvrement de la chape par du carrelage, et de 0,5% en masse dans le cas d'un recouvrement de la chape par du bois et un sol plastique, tel que du PVC, des règles différentes pouvant être en vigueur selon les pays.

Le délai de séchage est aujourd'hui considéré comme un inconvénient du mortier base sulfate de calcium. Ce temps de séchage peut être de l'ordre de 4 à 10 semaines pour les chapes à base de sulfate de calcium, selon l'épaisseur de la chape et les conditions extérieures, au lieu de 2 à 4 semaines pour les chapes à base de ciment.

Un premier moyen de réduire le temps de séchage qui a pu être envisagé est de réduire la teneur en eau introduite lors du gâchage de la composition de mortier. Cette solution a pour inconvénients majeurs :
- de diminuer la porosité totale du mortier ce qui ne la rend pas robuste aux conditions extérieures. En effet, si le séchage doit se faire à basse température, par exemple de l'ordre de 10°C, température classique en hiver, alors aucun gain du temps de séchage n'apparait. Une solution pouvant être appliquée quelles que soient les conditions extérieures est préférable.
- De réduire la phase de transfert hydrique d'eau liquide par capillarité via une réduction du volume d'eau totale mais d'entrainer un ralentissement de la seconde phase de transfert d'eau sous forme de vapeur d'eau à cause d'une porosité réduite.

Le document WO2017/012631 décrit l'utilisation d'un agent pour diminuer le temps de séchage d'une chape. Ce document décrit l'utilisation d'un agent hydrophobant et/ou d'un agent formant des pores pour diminuer le temps de séchage de la chape. Cette utilisation s'accompagne toutefois d'une dégradation des propriétés mécaniques.

Il existe donc un réel besoin de mettre un point un procédé pour diminuer le temps de séchage sans dégradation des propriétés mécaniques, notamment de la résistance mécanique à la flexion et à la compression d'une chape à base de sulfate de calcium.

Une des fonctions principales des chapes est de recevoir le revêtement de sol (définition de la norme européenne EN 13318). Parmi les caractéristiques d'une chape définissant son aptitude à recevoir un revêtement de sol, la principale est la cohésion de sa surface.

En outre, certaines réglementations imposent des cohésions de surface minimales pour une chape avant de pouvoir appliquer un revêtement de surface sur ladite chape. Or, la cohésion de surface d'une chape augmente lorsque le taux d'humidité de la chape diminue. Ainsi, il est généralement nécessaire d'attendre une certaine durée pour permettre le séchage de la chape, avant de pouvoir appliquer un revêtement de surface sur une chape.

Le document FR2893324 décrit un système permettant un recouvrement par du carrelage plus rapide d'une chape sulfate de calcium via l'amélioration de l'adhérence du carreau sur ladite chape via l'utilisation d'une colle à carrelage base sulfate de calcium hydrofugée ou d'une chape sulfate de calcium hydrofugée. Ce système est restrictif à la pose de carrelage collé via une colle spécifique.

Il existe donc un besoin d'augmenter la cohésion de surface de la chape pour réduire ce laps de temps entre l'application de la composition pour mortier de chape et l'application d'un revêtement sur la chape.

### RESUME DE L'INVENTION

L'invention concerne en premier lieu l'utilisation d'un agent entraineur d'air dans une chape contenant un liant hydraulique à base de sulfate de calcium pour diminuer le temps de séchage de ladite chape, ladite chape étant obtenue par séchage d'un mortier pour chape présentant une quantité d'air allant de 0,1% à 50% volumique et un ratio massique eau totale/liant allant de 0,28 à 0,70.

Selon un mode de réalisation, l'utilisation selon l'invention permet de diminuer le temps de séchage tout en maintenant les propriétés mécaniques de la chape, telles que la résistance à la flexion et/ou à la compression, ladite utilisation comprenant la diminution du ratio massique eau total/liant du mortier pour chape.

L'invention concerne également l'utilisation d'un agent entraineur d'air dans une chape contenant un liant hydraulique à base de sulfate de calcium pour augmenter la cohésion de surface de ladite chape, ladite chape étant obtenue par séchage d'un mortier pour chape présentant une quantité d'air allant de 0,1% à 50% volumique et un ratio massique eau totale/liant allant de 0,28 à 0,70.

De préférence, le mortier pour chape comprend de 1 à 25%vol., préférentiellement de 5 à 20%vol, d'air, par rapport au volume total du mortier pour chape.

De préférence, le ratio massique eau totale/liant va de 0,28 à 0,55, préférentiellement de 0,30 à 0,45.

Selon un mode de réalisation de l'invention, l'agent entraineur d'air représente de 0,01 à 1% en poids, de préférence de 0,05 à 0,5% en poids, du poids total de liant(s).

Selon un mode de réalisation de l'invention, l'agent entraineur d'air est choisi parmi les alkyl sulfate, les alkyl éther sulfate, les protéines, les bétaïnes, les alkyl (poly)glucosides, les oléfines sulfate, et leurs mélanges, de préférence parmi les bétaïnes, par exemple choisies parmi les alkyl(C8-C20)bétaïnes, les alkyl(C8-C20)amidoalkyl(C1-C6)bétaïnes, les sulfobétaïnes, les alkyl(C8-C20)sulfobétaïnes, les alkyl(C8-C20)amidoalkyl(C1-C6)sulfobétaïnes, et leurs mélanges.

Selon un mode de réalisation de l'invention, la chape comprend en outre au moins un agent fluidifiant/dispersant/plastifiant/superplastifiant, de préférence en une quantité allant de 0,01 à 1,5% en poids par rapport au poids total de liant(s).

De préférence, l'agent entraineur d'air est choisi parmi les bétaines et l'agent fluidifiant/dispersant/plastifiant/ superplastifiant est choisi parmi les polymélamines sulfonées et les polycarboxylate polyéther.

Selon un mode de réalisation de l'invention, l'agent entraineur d'air se présente sous forme de poudre.

L'invention a également pour objet un mortier pour chape comprenant au moins un liant hydraulique à base de sulfate de calcium, des granulats, au moins un agent entraineur d'air et de l'eau, ledit mortier pour chape présentant une quantité d'air allant de 0,1% à 50% volumique et un ratio massique eau totale/liant allant de 0,28 à 0,70.

Selon un mode de réalisation de l'invention, l'agent entraineur d'air est choisi parmi les alkyl sulfate, les alkyl éther sulfate, les protéines, les bétaïnes, les alkyl (poly)glucosides, les oléfines sulfate, et leurs mélanges, de préférence parmi les bétaïnes, de préférence choisies parmi les alkyl(C8-C20)bétaïnes, les alkyl(C8-C20)amidoalkyl(C1-C6)bétaïnes, les sulfobétaïnes, les alkyl(C8-C20)sulfobétaïnes, les alkyl(C8-C20)amidoalkyl(C1-C6)sulfobétaïnes, et leurs mélanges.

De préférence, le mortier pour chape selon l'invention comprend de 1 à 25%vol., préférentiellement de 5 à 20%vol, d'air, exprimé par rapport au volume total du mortier pour chape.

De préférence, le mortier pour chape selon l'invention présente un ratio massique eau totale/liant allant de 0,28 à 0,55, préférentiellement de 0,30 à 0,45.

Selon un mode de réalisation de l'invention, le mortier pour chape comprend en outre au moins un agent fluidifiant/dispersant/plastifiant/superplastifiant, de préférence en une quantité allant de 0,01 à 1,5% en poids par rapport au poids total de liant(s).

Enfin, l'invention a pour objet une chape obtenue par séchage du mortier pour chape selon l'invention.

L'invention a également pour objet un procédé d'application d'un revêtement de surface sur la chape selon l'invention, ledit revêtement de surface étant choisi parmi du carrelage, du bois et un sol plastique, ledit procédé comprenant l'application dudit revêtement sur ladite chape comprenant au moins 2% en poids d'eau, par rapport au poids total de la chape dans le cas d'un recouvrement par du carrelage et au moins 1% en poids d'eau, par rapport au poids total de la chape dans le cas d'un recouvrement par du bois ou un sol plastique.

Ces indications sont celles actuellement en vigueur en France, des règles différentes pouvant être en vigueur selon les pays.

La présente invention permet de surmonter les inconvénients de l'état de la technique.

Il a en particulier été découvert qu'un agent entraineur d'air permettait de diminuer le temps de séchage de compositions pour mortier de chape présentant un ratio massique eau totale/liant spécifique, généralement réduit, et une quantité d'air dans la composition de mortier de chape spécifique.

L'invention permet ainsi de diminuer le temps de séchage sans dégrader les propriétés mécaniques de ladite chape.

Ainsi, il a été découvert que la combinaison d'un agent entraineur d'air et d'un agent fluidifiant/dispersant/plastifiant/superplastifiant permettait de réduire le temps de séchage jusqu'à 50%, voire plus, sans dégrader les propriétés mécaniques de la chape.

Il a également été découvert qu'un agent entraineur d'air permettait d'augmenter la cohésion de surface d'une chape. L'augmentation de la cohésion de surface d'une chape permet notamment de pouvoir appliquer/coller un revêtement de surface sur la chape lorsque celle-ci présente un taux d'humidité élevé. Contrairement à la pratique de l'art antérieur, l'invention permet d'appliquer :
- un revêtement de type carrelage sur une chape lorsque la chape présente un taux d'humidité supérieur à 1% et pouvant atteindre 2% voire 3%.
- un revêtement de type bois ou sol plastique sur une chape lorsque la chape présente un taux d'humidité supérieur à 0,5% et pouvant atteindre 1% voire 1,5%.
L'invention permet ainsi de réduire la durée entre l'application de la composition pour mortier de chape et l'application d'un revêtement de surface sur ladite chape.

### BREVE DESCRIPTION DE LA FIGURE

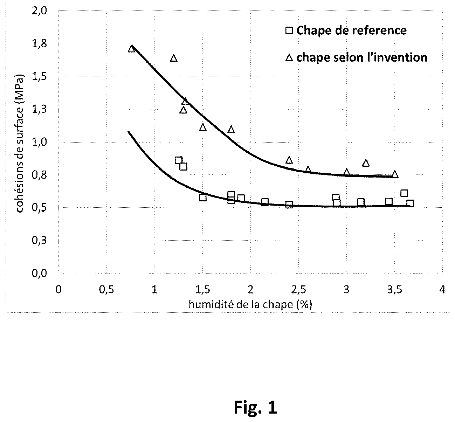

La Fig. 1 est un graph représentant la cohésion de surface (MPa) de deux chapes en fonction du taux d'humidité (% en poids d'eau).

### DESCRIPTION DETAILLEE DE L'INVENTION

L'invention a pour premier objet l'utilisation d'un agent entraineur d'air dans une chape contenant un liant hydraulique à base de sulfate de calcium pour diminuer le temps de séchage de ladite chape, ladite chape étant obtenue par séchage d'un mortier pour chape présentant une quantité d'air allant de 0,1% à 50% volumique et un ratio massique eau totale/liant allant de 0,28 à 0,70.

L'invention a également pour objet l'utilisation d'un agent entraineur d'air dans une chape contenant un liant hydraulique à base de sulfate de calcium pour augmenter la cohésion de surface de ladite chape, ladite chape étant obtenue par séchage d'un mortier pour chape présentant une quantité d'air allant de 0,1% à 50% volumique et un ratio massique eau totale/liant allant de 0,28 à 0,70.

L'invention est maintenant décrite plus en détail et de façon non limitative dans la description qui suit.

Le liant hydraulique utilisé dans l'invention est un liant hydraulique à base de sulfate de calcium. Par l'expression « liant hydraulique », on entend selon la présente invention tout composé ayant la propriété de s'hydrater en présence d'eau et dont l'hydratation permet d'obtenir un solide ayant des caractéristiques mécaniques. Le liant hydraulique peut notamment être un ciment Portland conformément à la norme EN 197-1 et/ou un ciment alumineux. Le liant peut encore être notamment du sulfate de calcium comme il sera décrit plus en détails infra.

Selon l'invention, la chape mise en oeuvre dans l'invention est une chape sulfate de calcium. En effet, le temps de séchage de ce type de chape est particulièrement long à cause d'un équilibre hygroscopique très bas, en particulier beaucoup plus bas que dans le cas des chapes ciment. L'invention est donc particulièrement intéressante pour les chapes base sulfate de calcium.

La chape sulfate de calcium est aussi désignée sous le terme de chape anhydrite. Une telle chape comprend un liant qui est du sulfate de calcium, de préférence anhydrite, ou un liant comprenant au moins 50 % en poids de sulfate de calcium, de préférence au moins 85% voire sensiblement 100%, exprimé par rapport au poids total de liant. Des fillers de différentes natures (calcaires, siliceux, cendres volantes, fumées de silice) peuvent être utilisés en complément du sulfate de calcium.

Ce sulfate de calcium peut être du semi-hydrate (forme beta ou alpha, de source naturelle ou de synthèse) ou anhydre, par exemple anhydrite II ou anhydrite III, obtenue à partir de sources de synthèse (fluoroanhydrite par exemple) ou de carrières naturelles ou par calcination de gypse naturel ou de synthèse (par exemple du gypse de désulfurisation FGD). On peut par exemple utiliser un procédé de calcination classique ou un procédé Rocal™. On peut utiliser des mélanges de différentes sources de sulfate de calcium.

Le mortier pour chape selon l'invention remplit généralement les exigences des normes européennes EN 13454-1 (liant) et EN 13813 (mortier) relatives aux liants et mortiers à base de sulfate de calcium pour chapes fluides.

La quantité de liant notamment sulfate de calcium dans la chape est classique, typiquement de l'ordre de 650kg/m³ plus ou moins 150 kg/m3 selon la classe de performance mécanique recherchée en fonction de l'application finale et notamment son épaisseur Le liant est présent en une quantité classique, notamment pour atteindre et conserver les qualités minimales spécifiées dans les normes ci-dessus.

Selon un mode de réalisation préféré, le(s) liant(s) mis en oeuvre dans l'invention comprennent au moins 50% en poids, de préférence au moins 85% en poids, de sulfate de calcium, par rapport au poids total de liant(s).

Il est possible de prévoir des quantités, généralement minoritaires, i.e. inférieures à 50% en poids, voire inférieures à 15% en poids, de fillers ou de liant(s) différent(s) du sulfate de calcium, tel que du ciment, quantités exprimées par rapport au poids total de liants.

La composition de chape selon l'invention comprend généralement des granulats.

Les granulats qui sont utilisés dans la formulation selon l'invention sont des granulats classiques conformes à la norme EN 12620 (sables pour béton). Les granulats sont généralement des matériaux inertes, en particulier, ils ne présentent pas la propriété de s'hydrater en présence d'eau. En pratique, le Dmax mesuré par exemple selon la norme granlulats EN 933-1 est de préférence inférieur à 8 mm, et en général le sable présente des tailles de particules sensiblement entre 0 et 8 mm (qui sont dénommés généralement sables 0/8), voire entre 0 et 4 mm (0/4) ou entre 0 et 2 mm (0/2).

Selon un mode de réalisation de l'invention, les granulats sont choisis parmi les sables. Le sable peut être de différentes origines, alluvionnaires lavés (roulés, semi-concassés ou concassés), sables d'origine marine, sables concassés calcaires (sec ou lavés), sables d'origine magmatique (porphyre, granité), granulats de recyclage issus du concassage de bétons ou d'autres matériaux de construction.

La chape mise en oeuvre selon l'invention aura de préférence une épaisseur allant de 2 à 15 cm, préférentiellement de 3 à 10 cm, plus préférentiellement de 4 à 8 cm.

Les inventeurs ont découvert de manière surprenante que l'utilisation d'un agent entraineur d'air dans une composition de chape présentant un faible ratio eau totale/liant permettait de diminuer le temps de séchage.

Lors de la fabrication d'une chape, la composition de chape est mélangée avec de l'eau, étape dite de gâchage, afin d'obtenir un mortier pour chape comprenant la composition de chape (ou composition pour mortier de chape) et de l'eau.

Généralement, le temps de séchage correspond au temps écoulé entre l'application du mortier pour chape et le moment où la teneur massique en eau de la chape est inférieure à 1%, voire inférieure à 0,5%, selon les applications ultérieures envisagées de la chape « sèche ».

Le temps de séchage peut donc être évalué en mesurant la teneur en eau de la chape. La teneur en eau peut être mesurée par la méthode de la bombe à carbure selon la norme DIN EN 18560.

Par « agent entraineur d'air », au sens de la présente invention, il faut comprendre un agent capable d'introduire de l'air dans le mortier de chape.

L'agent entraineur d'air permettra, durant la phase de séchage par diffusion de vapeur, de réduire la teneur en eau du mortier de chape. La phase de séchage par diffusion de vapeur (phase 2) démarre après la phase 1 (transfert d'eau liquide par capillarité) et a lieu entre l'humidité initiale (comprise entre 5 et 10% après déduction de l'eau utilisée pour l'hydratation des liants hydrauliques) et un niveau d'environ 3% d'humidité résiduelle. L'agent entraineur d'air utilisé selon l'invention introduira de préférence une porosité ouverte, ce qui favorisera le séchage de la chape.

Selon l'invention, l'agent entraineur d'air permettra d'introduire une quantité d'air dans le mortier pour chape allant de 0,1 à 50%vol., préférentiellement allant de 1 à 25%vol., plus préférentiellement allant de 5 à 20%vol., par rapport au volume total du mortier pour chape.

La génération d'air peut s'effectuer directement dans le matériau grâce à l'énergie de malaxage apporté au moment de la fabrication de la chape ou par un procédé séparé de génération de mousse. Selon une variante préférée, l'air sera introduit par génération d'air directement dans le mortier pour chape grâce à l'énergie de malaxage apporté au moment de la fabrication de la chape, par exemple à l'aide d'un malaxeur en centrale ou camion toupie, ou bien un camion mobile (Transmix™) ou un mélangeur en sortie de silo pour mortier sec sur chantier.

La quantité d'air est mesurée à l'aide d'un aéromètre à mortier selon la norme NF EN 413-2.

Selon un mode de réalisation de l'invention, la taille des bulles d'air dans la composition de chape va de 0,1 à 1000 µm, de préférence de 0,1 à 500 µm, de préférence encore de 0,1 à 100 µm. La taille des bulles d'air peut être mesurée par porosimétrie mercure, selon des méthodes bien connues de l'homme du métier.

L'agent entraineur d'air peut être choisi parmi les tensio-actifs non-ioniques, anioniques, cationiques ou zwitterioniques.

Selon un mode de réalisation, l'agent entraineur d'air est choisi parmi les alkyl sulfate, les alkyl éther sulfate, les protéines, les bétaïnes, les alkyl (poly)glucosides, les oléfines sulfate, et leurs mélanges, les groupes alkyle pouvant par exemple comprendre de 1 à 24 atomes de carbone, de préférence de 6 à 18 atomes de carbone.

De façon préférentielle, l'agent entraineur d'air est choisi parmi les bétaïnes, les alkyl (poly)glucosides et leurs mélanges, de façon encore plus préférentielle parmi les bétaïnes, les groupes alkyle pouvant par exemple comprendre de 1 à 24 atomes de carbone, de préférence de 6 à 18 atomes de carbone.

Selon un mode de réalisation de l'invention, les bétaïnes sont choisies parmi les alkyl(C8-C20)bétaïnes, les alkyl(C8-C20)amidoalkyl(C1-C6)bétaïnes, les sulfobétaïnes, les alkyl(C8-C20)sulfobétaïnes, les alkyl(C8-C20)amidoalkyl(C1-C6)sulfobétaïnes, et leurs mélanges.

De préférence, l'agent entraineur d'air utilisé selon l'invention est choisi parmi les alkyl(C8-C20)amidoalkyl(C1-C6)bétaïnes, telle que la C8-C18-alkyl(C8-C18)amidopropylbétaine, de numéro CAS 97862-59-4.

Le mortier pour chape mis en oeuvre dans l'invention présente un ratio massique eau totale/liant allant de 0,28 à 0,70, de préférence de 0,28 à 0,55, préférentiellement de 0,30 à 0,45.

Le ratio massique eau totale/liant correspond au ratio massique entre la quantité d'eau présente dans le mortier pour chape et la quantité de liant présent dans le mortier pour chape, ledit ratio eau totale/liant étant ainsi défini après gâchage avec de l'eau.

L'eau totale est la résultante de l'ajout d'eau lors du gâchage de la composition pour mortier de chape et de l'eau naturellement présente dans les constituants (granulats principalement) de la composition pour mortier de chape.

L'utilisation de cet agent entraineur d'air peut générer via une quantité d'air plus élevée, une porosité finale plus importante qui dégrade les performances mécaniques, phénomène bien connu de l'homme de l'art.

Les inventeurs ont également découvert qu'en diminuant le ratio massique eau totale/liant du mortier pour chape :
- cela permettait de favoriser le maintien des propriétés mécaniques de la chape.
- cela réduirait la quantité d'eau libre sous forme liquide à évaporer par capillarité durant la première phase de séchage.

Ainsi, les inventeurs ont découvert de façon surprenante que la combinaison de la réduction d'eau et de l'introduction d'un agent entraineur d'air permet de maintenir les performances mécaniques tout en accélérant les différentes phases de séchage y compris lors de la seconde phase de transfert (vapeur d'eau) grâce à un maintien d'une porosité au moins similaire à un mortier pour chape standard.

En effet, il a été découvert de manière surprenante qu'en ajoutant l'agent entraineur d'air et en diminuant le ratio massique eau totale/liant d'un mortier pour chape, par rapport par exemple à un mortier pour chape de référence (mortier de composition identique mais sans agent entraineur d'air), cela permettait à la fois de diminuer le temps de séchage de manière drastique, de l'ordre de 50%, et de maintenir les propriétés mécaniques de ladite chape. La diminution du ratio massique eau/liant peut se faire soit en diminuant la quantité d'eau soit en augmentant la quantité de liant, de préférence en diminuant la quantité d'eau.

Ainsi, selon un mode de réalisation particulier de l'invention, l'utilisation se caractérise par l'ajout d'un agent entraineur d'air en combinaison avec la diminution du ratio eau totale/liant, ceci permettant simultanément de réduire à la fois les temps de séchage, en particulier lors de la première puis de la seconde phase (transfert liquide puis gazeux de l'eau libre), et de maintenir les performances mécaniques, en particulier la résistance à la flexion et à la compression, du mortier pour chape.

Selon un mode de réalisation, le ratio massique eau totale/liant du mortier va de 0,28 à 0,70, de préférence de 0,28 à 0,55, préférentiellement de 0,30 à 0,45.

Selon un mode de réalisation de l'invention, avant introduction de l'agent entraineur d'air et avant gâchage, la composition pour mortier de chape comprend, de préférence consiste en :
- De 25 à 60% en poids de liant(s) à base de sulfate de calcium, de préférence consistant en du sulfate de calcium et d'éventuels fillers,
- De 30 à 80% en poids de granulats,
- De 0 à 20% en poids d'additifs (différents des liants, granulats et agents entraineur d'air), de préférence choisi parmi les plastifiants, les fibres, les agents épaississants, les agents viscosants, les agents antipellicule, les traceurs, les colorants, les accélérateurs, retardateurs et rétenteurs d'eau et leurs mélanges,
par rapport au poids total de la composition pour mortier de chape (sèche).

De l'eau est ensuite ajoutée lors du gâchage de la composition de mortier, selon des méthodes classiques bien connues de l'homme du métier. Après gâchage, le mortier pour chape peut comprendre de 5 à 20% en poids d'eau, par rapport au poids total du mortier pour chape (humide).

Selon un mode de réalisation de l'invention, l'agent entraineur d'air est introduit en une quantité allant de 0,01 à 1% en poids, de préférence de 0,01 à 0,5% en poids, par rapport au poids total de liant(s) dans la composition de mortier de chape.

L'agent entraineur d'air peut par exemple être ajouté dans le liant ou dans la composition de mortier de chape lors de sa préparation ou encore au moment du gâchage de la composition de chape.

L'agent entraineur d'air peut se présenter sous forme liquide ou sous forme de poudre, de préférence il se présente sous forme de poudre.

Selon un mode de réalisation de l'invention, l'agent entraineur d'air est utilisé en combinaison avec un agent fluidifiant/dispersant/plastifiant/superplastifiant (SP).

En effet, les inventeurs ont découvert que la combinaison d'un agent entraineur d'air et d'un agent fluidifiant/dispersant/plastifiant/superplastifiant (SP) dans une composition pour mortier de chape permettait de réduire considérablement le temps de séchage de mortier pour chape, sans dégradation des propriétés mécaniques de la chape ainsi obtenue.

L'invention peut ainsi, selon un mode de réalisation, mettre en oeuvre un agent fluidifiant/dispersant/plastifiant/superplastifiant (SP). Ces termes sont utilisés de façon interchangeable pour désigner un additif permettant, par son addition à une composition aqueuse de sulfate de calcium, de réduire la demande en eau et de maintenir la fluidité/rhéologie du mortier.

Selon un mode de réalisation de l'invention, l'agent fluidifiant/dispersant/plastifiant/superplastifiant est obtenu par condensation de formaldéhyde et de naphtalène sulfoné ou par condensation de formaldéhyde et de mélamines sulfonées. Des dispersants à base de copolymères (méth)acrylique peuvent aussi être utilisés, de préférence ce sont des polymères comprenant une chaîne avec une fonction polycarboxylique, éventuellement salifiée, à laquelle un autre groupe (par exemple du type polycarboxylate ou polyalkoxyéthylène) est attaché.

Selon un mode de réalisation de l'invention, l'agent fluidifiant/dispersant/plastifiant/superplastifiant est introduit en une quantité allant de 0,01 à 2% en poids, de préférence de 0,02 à 1% en poids, par rapport au poids total de liant(s) dans la composition pour mortier de chape.

Selon un mode de réalisation préféré, le ratio massique agent entraineur d'air/agent fluidifiant/dispersant/plastifiant/superplastifiant dans la composition pour mortier de chape va de 0,1 à 20, de préférence de 0,2 à 10.

La composition de chape peut comprendre d'autres additifs classiques dans le domaine des chapes à base de sulfate de calcium. On peut citer par exemple les fibres, les agents épaississants, agents de viscosité, agents anti pellicule, traceurs, colorants, accélérateurs, retardateurs, rétenteurs d'eau, etc.

Des fibres peuvent être ajoutées, comme des fibres polymères ou des fibres de verre.

Des agents viscosifiants et des épaississants peuvent aussi être utilisés, notamment pour éviter la ségrégation et/ou le ressuage. Par exemple on peut utiliser des biopolymères, des silices précipitées ou les dérivés de cellulose.

De façon classique, le liant qui est livré sur les chantiers pourra comprendre aussi un (super)plastifiant SP. Le liant sera dit préfluidifié. La quantité de SP dépend des caractéristiques physico chimiques des matériaux et de la rhéologie recherchée.

Mais il existe des liants non préfluidifiés pour lesquels le (super)plastifiant SP est ajouté par le producteur de mortier pour chape éventuellement sous forme poudre ou préférentiellement sous forme liquide.

Selon un mode de réalisation de l'invention, un (super)plastifiant SP sera de préférence fourni en quantités plus élevées, de sorte à pouvoir encore réduire le ratio eau/liant.

L'invention concerne donc l'utilisation d'un agent entraineur d'air éventuellement en association avec un agent fluidifiant/dispersant/plastifiant/superplastifiant, qui peut être inclus dans la formulation du liant ou livré en complément pour ajout lors de la fabrication du mortier, l'ajout pourra dans ce cas être réalisé sous forme de poudre ou sous forme liquide, pour mélange au liant, ce liant pouvant comprendre généralement aussi déjà un (super)plastifiant.

L'invention peut être mise en oeuvre de différentes façons. On peut ajouter l'agent entraineur d'air et le cas échéant l'agent fluidifiant/dispersant/plastifiant/superplastifiant (notamment sous forme d'une poudre ou sous forme liquide) :
- En usine de production du liant.
- En centrale à béton : dans le malaxeur ou dans la toupie.
- Sur chantier dans un camion mobile (Transmix ™) transportant les différents composants du mortier pour chape en réalisant un mélange sur place à l'aide d'un outil de malaxage et pompage intégré au camion..
- Sur chantier à la sortie de silos mono chambre pour mortier sec pré mélangé ou bien de silos bi chambre pour stockage séparés de liant et de sable via un outil de malaxage utilisé pour incorporer l'eau aux composants secs.

Parmi les propriétés mécaniques qui sont maintenues selon l'invention, on peut mentionner la résistance à la flexion et la résistance à la compression, qui peuvent être mesurées selon la norme NF EN 13454-2.

L'invention décrit ainsi un procédé pour diminuer le temps de séchage, ledit procédé comprenant l'ajout d'un agent entraineur d'air dans une composition pour mortier de chape comprenant au moins un liant hydraulique à base de sulfate de calcium, étant entendu que le mortier de chape présente, après gâchage avec de l'eau, un ratio eau totale/liant allant de 0,28 à 0,70 et une quantité d'air allant de 0,1 à 50% volumique.

Comme expliqué précédemment, l'utilisation de l'agent entraineur d'air associé à un ratio eau totale/liant spécifique obtenu via par exemple l'ajout d'un (super)plastifiant SP permet d'obtenir une chape présentant une faible quantité d'eau résiduelle en un minimum de temps, tout en ayant des propriétés mécaniques satisfaisantes, en particulier une résistance à la flexion et/ou à la compression adéquate.

Plus particulièrement, il a été découvert qu'en abaissant le ratio massique eau totale/liant du mortier pour chape, cela favorisait encore plus le maintien desdites propriétés mécaniques en présence d'air entrainé.

Les inventeurs ont découvert qu'ajouter un agent entraineur d'air à une composition pour mortier de chape permettait d'augmenter la cohésion de surface d'une chape obtenue à partir de ladite composition pour mortier de chape.

Par conséquent, l'invention permet d'appliquer un revêtement de surface sur une chape présentant un taux d'humidité élevé, puisqu'il n'est plus nécessaire d'atteindre un faible taux d'humidité de la chape. En effet, pour obtenir la cohésion de surface requise pour l'application d'un revêtement de surface sur ladite chape, il était nécessaire d'augmenter le temps de séchage pour diminuer le taux d'humidité de la chape (avant application d'un revêtement sur la chape).Ainsi, l'invention propose l'utilisation d'un agent entraineur d'air dans une chape contenant un liant hydraulique à base de sulfate de calcium pour réduire la durée entre l'application de la composition pour mortier de chape et l'application d'un revêtement de surface sur ladite chape, ladite chape étant obtenue par séchage d'un mortier pour chape présentant une quantité d'air allant de 0,1% à 50% volumique et un ratio massique eau totale/liant allant de 0,28 à 0,70.

Selon un mode de réalisation, le revêtement de surface est choisi parmi les carrelages, les sols plastiques, tel que le PVC ou le bois.

### Mortier pour chape

L'invention a également pour objet un mortier pour chape comprenant au moins un liant hydraulique à base de sulfate de calcium, des granulats, au moins un agent entraineur d'air et de l'eau, ledit mortier présentant un ratio massique eau totale/liant allant de 0,28 à 0,70 et une quantité d'air allant de 0,1% à 50% volumique.

De préférence, le ratio massique eau totale/liant va de 0,28 à 0,55, préférentiellement de 0,30 à 0,45.

Selon un mode de réalisation, le liant hydraulique est tel que défini ci-dessus dans le cadre de l'utilisation selon l'invention. De préférence, le liant hydraulique comprend au moins 50% en poids, préférentiellement au moins 85% en poids par rapport au poids total de liant(s), de sulfate de calcium, éventuellement en mélange avec d'autres liant hydrauliques comme du ciment, laitier de haut fourneaux, ou des fillers inertes. Selon un mode de réalisation préféré, le liant hydraulique consiste en du sulfate de calcium.

Selon un mode de réalisation, les granulats sont tels que définis ci-dessus dans le cadre de l'utilisation selon l'invention. De préférence, le granulat est choisi parmi les sables.

Selon un mode de réalisation, l'agent entraineur d'air est tel que défini ci-dessus dans le cadre de l'utilisation selon l'invention. De préférence, l'agent entraineur d'air est choisi parmi les alkyl sulfate, les alkyl éther sulfate, les protéines, les bétaïnes, les alkyl (poly)glucosides, les oléfines sulfate, et leurs mélanges, les groupes alkyle pouvant par exemple comprendre de 1 à 24 atomes de carbone, de préférence de 6 à 18 atomes de carbone.

Selon un mode de réalisation préféré, l'agent entraineur d'air est choisi parmi les bétaïnes, par exemple choisies parmi les alkyl(C8-C20)bétaïnes, les alkyl(C8-C20)amidoalkyl(C1-C6)bétaïnes, les sulfobétaïnes, les alkyl(C8-C20)sulfobétaïnes, les alkyl(C8-C20)amidoalkyl(C1-C6)sulfobétaïnes, et leurs mélanges.

Selon un mode de réalisation de l'invention, le mortier pour chape comprend de 1 à 25%vol., préférentiellement de 5 à 20%vol, d'air, exprimé par rapport au volume total du mortier pour chape.

Comme expliqué ci-dessus, la génération d'air peut s'effectuer directement dans le matériau grâce à l'énergie de malaxage apporté au moment de la fabrication de la chape ou par un procédé séparé de génération de mousse. Selon une variante préférée, l'air sera introduit par génération d'air directement dans le mortier pour chape grâce à l'énergie de malaxage apporté au moment de la fabrication du mortier pour chape, par exemple à l'aide d'un malaxeur en centrale ou camion toupie voire en camion mobile ou silo de chantier.

Le mortier pour chape peut en outre comprendre un ou plusieurs additifs (différents des liants, granulats et agents entraineur d'air, mis en oeuvre dans le mortier pour chape), tels que des agents fluidifiant/dispersant/plastifiant/superplastifiant, des fibres, des agents épaississants, des agents viscosifiants, des agents antipellicule, des traceurs, ou des colorants. De préférence, le mortier pour chape selon l'invention comprend au moins un agent fluidifiant/dispersant/plastifiant/superplastifiant. De préférence, les additifs sont tels que définis ci-dessus.

En particulier, selon un mode de réalisation de l'invention, l'agent fluidifiant/dispersant/plastifiant/superplastifiant est obtenu par condensation de formaldéhyde et de naphtalène sulfoné ou par condensation de formaldéhyde et de mélamines sulfonées. Des dispersants à base de copolymères (méth)acrylique peuvent aussi être utilisés, de préférence ce sont des polymères comprenant une chaîne avec une fonction polycarboxylique, éventuellement salifiée, à laquelle un autre groupe (par exemple du type polycarboxylate ou polyalkoxyéthylène) est attaché.

Selon un mode de réalisation de l'invention, l'agent fluidifiant/dispersant/plastifiant/superplastifiant est introduit en une quantité allant de 0,01 à 2% en poids, de préférence de 0,02 à 1% en poids, par rapport au poids total de liant(s) dans le mortier de chape.

Selon un mode de réalisation préféré, le ratio massique agent entraineur d'air/agent fluidifiant/dispersant/plastifiant/superplastifiant dans le mortier de chape va de 0,1 à 20, de préférence de 0,2 à 10.

Selon un mode de réalisation, le mortier pour chape comprend, de préférence consiste en :
- de 25% à 50% en poids de liant(s) hydraulique à base de sulfate de calcium, de préférence consistant en du sulfate de calcium,
- de 20 à 70% en poids de granulats, de préférence choisis parmi les sables, tels que les sables 0/2 - 0/4 ou 0/8 mm,
- de 0,01 à 1% en poids d'agent(s) entraineur d'air, de préférence choisi parmi les bétaïnes,
- de 0 à 15% en poids d'additifs (différents des liants et granulats et agent entraineur d'air),
- de 5 à 20% en poids d'eau totale,
   par rapport au poids total du mortier pour chape,
étant entendu que le ratio eau totale/liant va de 0,28 à 0,70 et que la quantité d'air va de 0,1 %vol. à 50%vol.

Le mortier pour chape peut être obtenu selon des procédés connus de l'homme du métier, par exemple en mélangeant le liant, les granulats et l'agent entraineur d'air de préférence sous forme de poudre puis en ajoutant de l'eau pour le gâchage. Selon un autre mode de réalisation, l'agent entraineur d'air est ajouté en même temps que l'eau de gâchage. Comme expliqué précédemment, un malaxage peut être prévu afin d'introduire de l'air dans le mortier pour chape.

Le mortier pour chape est destinée à être appliquée par étalement sur une surface, avant séchage/durcissement et obtention d'une chape. L'étalement du mortier pour chape peut se faire selon des procédés bien connus de l'homme du métier.

### Chape

L'invention concerne enfin une chape obtenue par séchage du mortier pour chape selon l'invention.

La chape selon l'invention peut présenter une épaisseur allant de 2 à 15 cm, préférentiellement de 3 à 10 cm, plus préférentiellement de 4 à 8 cm.

L'invention a également pour objet un procédé d'application d'un revêtement de surface sur la chape selon l'invention, ledit procédé comprenant l'application dudit revêtement sur ladite chape.

A titre d'exemple selon les règlementations françaises, le revêtement de surface est appliqué lorsque la chape présente au moins 2% en poids d'eau, par rapport au poids total de la chape dans le cas d'un recouvrement par du carrelage et au moins 1% en poids d'eau, par rapport au poids total de la chape dans le cas d'un recouvrement par du bois ou un sol plastique tel que le PVC, des règles différentes pouvant être en vigueur selon les pays.

Selon un mode de réalisation, le revêtement de surface est choisi parmi les carrelages, les sols plastiques, tel que le PVC, et le bois.

Selon un mode de réalisation, le revêtement de surface est appliqué sur la chape lorsqu'elle comprend au moins 2% en poids d'eau, voire au moins 3% en poids d'eau, par rapport au poids total de la chape dans le cas du carrelage et au moins 1% en poids voire au moins 1,5% en poids d'eau dans le cas du bois ou des sols plastiques.

Typiquement, la chape présentera une teneur en eau inférieure à 5% en poids, de préférence inférieure à 4% en poids lorsqu'un revêtement de sol est appliqué sur ladite chape.

Les exemples suivants illustrent l'invention sans la limiter.

### EXEMPLES

On utilise les produits suivants :
- AEA1 = agent entraineur d'air de type bétaïne
- AEA2 = agent entraineur d'air de type alkyl (poly)glucosides.

Les compositions de mortier de chape sont préparées selon des procédés bien connus de l'homme du métier, par exemple par simple mélange à sec des constituants sous forme de poudre puis par un ajout d'eau lors du gâchage, dans les proportions indiquées ci-dessous.

Le temps de séchage est le temps nécessaire pour atteindre 1% en poids d'eau résiduelle dans la chape au moyen de la méthode de la bombe à carbure selon la norme DIN EN 18560.

La résistance en flexion et la résistance en compression sont mesurées selon la norme NF EN 13454-2.

### Exemple 1 : évaluation du temps de séchage et des propriétés mécaniques avec un ratio massique e/l constant

Un mortier de chape de référence a été préparé selon les proportions suivantes :
- 650 kg/m³ de liant sulfate de calcium,
- 1167 kg/m³ de granulats de type sable,
- 330 kg/m³ d'eau, de façon à obtenir un ratio massique eau/liant (e/l) de 0,51.

Deux exemples selon l'invention ont été effectués en ajoutant au mortier de chape de référence un agent entraineur d'air dans les proportions suivantes :
- 0,2% en poids de AEA1 par rapport au poids de liant, est incorporé dans le mortier de chape de référence,
- 0,06% en poids de AEA2 par rapport au poids de liant, est incorporé dans le mortier de chape de référence.

Le mortier pour chape est étalée selon des méthodes bien connues, afin d'obtenir une épaisseur de chape de 4 cm. Ce test est effectué à une température de 20°C et une humidité relative de 50%.

Ce temps de séchage est indiqué dans le tableau 1 ci-dessus, dans lequel la quantité d'air (%vol.) dans le mortier de chape est également indiquée.
La résistance en flexion et en compression est indiquée dans le tableau 1 ci-dessous.

**Tableau 1 : Résultats des essais avec un ratio massique e/l constant de 0,51**

| | Composition de référence | Composition comprenant 0,2% en poids de AEA1 | Composition comprenant 0,06% en poids de AEA2 |
|---|---|---|---|
| % air dans le mortier | 0,5% | 6,5% | 9% |
| Temps de séchage | 31 jours | 12 jours | 12 jours |
| Réduction du temps/Référence | | 62% | 62% |
| Résistance en flexion (N/mm2) | 9,0 | 7,5 | 6,5 |
| Résistance en compression (N/mm2) | 30 | 23 | 20 |

Ces essais montrent que l'agent entraineur d'air permet de diminuer le temps de séchage d'une chape comprenant 6,5% ou 9% d'air de plus de 50%.
On peut observer une diminution de la résistance en flexion et en compression.

### Exemple 2 : évaluation du temps de séchage et des propriétés mécaniques avec un ratio massique e/l réduit

Deux compositions pour mortier de chape, présentant deux ratios massiques e/l différents, ont été préparées et comparées.

Le mortier de chape de référence a été préparé selon les proportions suivantes :
- 650 kg/m³ de liant sulfate de calcium
- 1167 kg/m³ de granulats de type sable 0/4 mm
- 330 kg/m³ d'eau totale de façon à obtenir un ratio massique eau/liant de 0,51.

Le mortier de chape selon l'invention a été préparé selon les proportions suivantes :
- 650 kg/m³ de liant sulfate de calcium
- 1063 kg/m³ de granulats de type sable 0/4 mm
- 270 kg/m³ d'eau totale de façon à obtenir un ratio massique eau/liant de 0,42.
L'agent entraineur d'air AEA1 a été ajouté en une quantité de 0,2% en poids par rapport au liant dans la composition selon l'invention.
Un ajout de (super)plastifiant SP à hauteur de 0,30% en poids par rapport au liant a été utilisé dans la composition selon l'invention pour permettre une diminution du ratio massique eau / liant (e/l).

Le mortier pour chape est coulé selon des méthodes bien connues, afin d'obtenir une épaisseur de chape de 6 cm. Ce test est effectué à une température de 10°C et une humidité relative de 78%.

Le temps de séchage et la résistance en flexion et en compression sont indiqués dans le tableau 2 ci-dessous.

**Tableau 2 : Résultats des essais avec un ratio massique e/l réduit**

| | Composition de référence (e/l = 0,51) | Composition comprenant AEA1 (e/l = 0,42) |
|---|---|---|
| % air dans le mortier | 0,5% | 10% |
| Temps de séchage | 70 jours | 37 jours |
| Réduction du temps/Référence | | 47% |
| Résistance en flexion (N/mm²) | 9 | 9 |
| Résistance en compression (N/mm²) | 30 | 32 |

On peut ainsi noter que l'agent entraineur d'air permet de diminuer le temps de séchage de l'ordre de 50%.

Ainsi, l'agent entraineur d'air permet de diminuer le temps de séchage de manière drastique (jusqu'à 50% ici) tout en maintenant les propriétés mécaniques de la chape, en particulier lorsque le ratio e/l est inférieur à 0,51.

### Exemple 3 : Evaluation de la cohésion de surface d'une chape

Un mortier de chape de référence et un mortier de chape selon l'invention tels que ceux décrits dans l'exemple 2 ci-dessus ont été préparés.
Leurs performances mécaniques en flexion et compression sont identiques à celles indiquées dans le tableau ci-dessus.
Le mortier de chape de référence a été préparé selon les proportions suivantes :
- 650 kg/m³ de liant sulfate de calcium
- 1063 kg/m³ de granulats de type sable 0/4 mm
- 270 kg/m³ d'eau totale de façon à obtenir un ratio massique eau/liant de 0,42.

Un agent entraineur d'air AEA1 a été ajouté au mortier de chape de référence en une quantité de 0,2% en poids par rapport au liant dans la composition selon l'invention. Un ajout de (super)plastifiant SP à hauteur de 0,30% en poids par rapport au liant a également été utilisé dans la composition selon l'invention (avec agent entraineur d'air).

Le mortier de chape selon l'invention présente alors 10% d'air.

La cohésion de surface de la chape de référence et celle de la chape selon l'invention a été mesurée à l'aide de la norme EN 13892-8. La méthode utilisée dans les présents exemples diffère de celle de la norme par une profondeur de carottage, celle-ci est d'uniquement 5 mm en surface de la chape pour le présent exemple.

La cohésion de surface a été mesurée à différents taux d'humidité de la chape. Le « taux d'humidité » correspond à la quantité massique d'eau dans la chape mesurée par la méthode de la bombe à carbure ou par perte au feu à 45°C.

La cohésion de surface en fonction du taux d'humidité est représentée sur la Fig. 1, pour la chape de référence (sans agent entraineur d'air) et la chape selon l'invention (avec agent entraineur d'air).

On peut observer sur les résultats de la Fig. 1 que pour tous les taux d'humidité, l'amélioration de la cohésion de surface est d'au moins 25% par rapport à la chape de référence et ce avec une performance mécanique de résistance en compression et flexion similaire.

## Revendications

1. Utilisation d'un agent entraineur d'air dans une chape contenant un liant hydraulique à base de sulfate de calcium pour diminuer le temps de séchage de ladite chape, ladite chape étant obtenue par séchage d'un mortier pour chape présentant une quantité d'air allant de 0,1% à 50% volumique et un ratio massique eau totale/liant allant de 0,28 à 0,70.

2. Utilisation selon la revendication 1, pour diminuer le temps de séchage tout en maintenant les propriétés mécaniques de la chape, telles que la résistance à la flexion et/ou à la compression, ladite utilisation comprenant la diminution du ratio massique eau total/liant du mortier pour chape.

3. Utilisation d'un agent entraineur d'air dans une chape contenant un liant hydraulique à base de sulfate de calcium pour augmenter la cohésion de surface de ladite chape, ladite chape étant obtenue par séchage d'un mortier pour chape présentant une quantité d'air allant de 0,1% à 50% volumique et un ratio massique eau totale/liant allant de 0,28 à 0,70.

4. Utilisation selon l'une quelconque des revendications 1 à 3, dans laquelle le mortier pour chape comprend de 1 à 25%vol., préférentiellement de 5 à 20%vol, d'air, par rapport au volume total du mortier pour chape.

5. Utilisation selon l'une quelconque des revendications 1 à 4, dans laquelle le ratio massique eau totale/liant va de 0,28 à 0,55, préférentiellement de 0,30 à 0,45.

6. Utilisation selon l'une quelconque des revendications 1 à 5, dans laquelle l'agent entraineur d'air représente de 0,01 à 1% en poids, de préférence de 0,05 à 0,5% en poids, du poids total de liant(s).

7. Utilisation selon l'une quelconque des revendications 1 à 6, dans laquelle l'agent entraineur d'air est choisi parmi les alkyl sulfate, les alkyl éther sulfate, les protéines, les bétaïnes, les alkyl (poly)glucosides, les oléfines sulfate, et leurs mélanges, de préférence parmi les bétaïnes, par exemple choisies parmi les alkyl(C8-C20)bétaïnes, les alkyl(C8-C20)amidoalkyl(C1-C6)bétaïnes, les sulfobétaïnes, les alkyl(C8-C20)sulfobétaïnes, les alkyl(C8-C20)amidoalkyl(C1-C6)sulfobétaïnes, et leurs mélanges.

8. Utilisation selon l'une quelconque des revendications 1 à 7, dans laquelle la chape comprend en outre au moins un agent fluidifiant/dispersant/plastifiant/superplastifiant, de préférence en une quantité allant de 0,01 à 1,5% en poids par rapport au poids total de liant(s).

9. Utilisation selon la revendication 8, dans laquelle l'agent entraineur d'air est choisi parmi les bétaines et l'agent fluidifiant/dispersant/plastifiant/ superplastifiant est choisi parmi les polymélamines sulfonées et les polycarboxylate polyéther.

10. Mortier pour chape comprenant au moins un liant hydraulique à base de sulfate de calcium, des granulats, au moins un agent entraineur d'air et de l'eau, ledit mortier pour chape présentant une quantité d'air allant de 0,1% à 50% volumique et un ratio massique eau totale/liant allant de 0,28 à 0,70.

11. Mortier pour chape selon la revendication 10, comprenant de 1 à 25%vol., préférentiellement de 5 à 20%vol, d'air, exprimé par rapport au volume total du mortier pour chape.

12. Mortier pour chape selon l'une quelconque des revendications 10 à 11, présentant un ratio massique eau totale/liant allant de 0,28 à 0,55, préférentiellement de 0,30 à 0,45.

13. Mortier pour chape selon l'une quelconque des revendications 10 à 12, comprenant en outre au moins un agent fluidifiant/dispersant/plastifiant/superplastifiant, de préférence en une quantité allant de 0,01 à 1,5% en poids par rapport au poids total de liant(s).

14. Chape obtenue par séchage du mortier pour chape selon l'une quelconque des revendications 10 à 13.

15. Procédé d'application d'un revêtement de surface sur la chape selon la revendication 14, ledit revêtement de surface étant choisi parmi les carrelages, le bois et les sols plastiques, ledit procédé comprenant l'application dudit revêtement sur ladite chape comprenant de préférence au moins 2% en poids d'eau, par rapport au poids total de la chape, dans le cas du carrelage et au moins 1% en poids d'eau, dans le cas du bois ou des sols plastiques.
